# EUROPEAN PATENT APPLICATION

(11) **EP 4 478 459 A1**
(43) Date of publication of application: **18.12.2024**
(21) Application number: 23766129.3
(22) Date of filing: 10.03.2023
(51) Int. Cl.: H01M 4/62, H01M 4/38, H01M 4/36

(54) **COMPOSITE NEGATIVE ELECTRODE MATERIAL, PREPARATION METHOD THEREFOR, NEGATIVE ELECTRODE PIECE, BATTERY, AND ELECTRIC DEVICE**

(30) Priority: 10.03.2022 CN 202210235984
(71) Applicant: BYD Company Limited, Shenzhen, Guangdong 518118 (CN)
(72) Inventor: HU, Jing, Shenzhen, Guangdong 518118 (CN); XI, Lihua, Shenzhen, Guangdong 518118 (CN); WU, Chuchu, Shenzhen, Guangdong 518118 (CN)
(74) Representative: Arnold & Siedsma
(86) International application number: PCT/CN2023/080729
(87) International publication number: WO 2023/169552

(57) **Abstract**

A composite anode material includes an inner core, a first coating layer coated on the surface of the inner core, and a second coating layer coated on the surface of the first coating layer. The inner core includes silicon nanoparticles and titanium monoxide particles. The first coating layer includes silicon suboxide. The second coating layer includes carbon fibers with a porous structure. A preparation method of the composite anode material, a battery including an anode sheet and a powered device including the battery are also provided, wherein the anode sheet includes the composite anode material.

## Description

### CROSS-REFERENCE TO RELATED APPLICATIONS

This application claims the priority to Chinese Patent Application No. 202210235984.6, titled "Composite Anode Materials and Preparation Method thereof, Anode Sheet and Battery", filed on March 10, 2022, the content of which is incorporated herein by reference in its entirety.

### FIELD

This application relates to the field of lithium-ion battery technology, in particular to a composite anode material and a preparation method thereof, an anode sheet, a battery and a powered device.

### BACKGROUND

Lithium secondary batteries have been widely used in portable electronic products such as mobile phones and laptops, new energy vehicles and other fields. The energy density of lithium-ion batteries based on traditional graphite anodes has been approaching the limit, therefore people's growing standby and endurance demands have not been met. The theoretical specific capacity of silicon anode materials is relatively high, thus using silicon anode materials is considered as an effective way to break through the high energy density of lithium secondary batteries. However, silicon anode materials have a significant volume effect (volume expansion rate is greater than 300%) during the lithium intercalation/de-intercalation process, then pulverization and detachment occur after multiple cycles, which leads to a sharp decline in the cycling performance of the batteries. In addition, silicon is a semiconductor material with low conductivity, which also leads to poor rate performance of the batteries. Therefore, it is necessary to provide a technical solution which effectively solves both the volume expansion and the conductivity problems of silicon.

### SUMMARY

In order to solve the above-mentioned technical problems, the present application aims to provide a composite anode material for lithium-ion batteries with a novel structure, which has an extremely low volume expansion effect and a good conductivity, leading to good cycling performance and rate performance of the batteries.

Specifically, the first aspect of the present application provides a composite anode material, wherein the composite anode material includes an inner core, a first coating layer coated on the surface of the inner core, and a second coating layer coated on the surface of the first coating layer, wherein the inner core includes silicon nanoparticles and titanium monoxide particles; the first coating layer includes silicon suboxide; and the second coating layer includes carbon fibers with a porous structure.

In some embodiments, the particle size distribution of the silicon nanoparticles (101) is in the range of 80-150nm.

In some embodiments, the mass ratio of the silicon nanoparticles (101) in the composite anode material (100) is 60% -82%.

In some embodiments, the average particle size of the titanium monoxide particles is 40-60nm.

In some embodiments, the mass ratio of the titanium monoxide particles in the composite anode material (100) is 2.5% -20%.

In some embodiments, the thickness of the first coating layer (20) is 3-25nm.

In some embodiments, the silicon suboxide includes amorphous silicon suboxide.

In some embodiments, the chemical formula of the silicon suboxide is SiOx, 1≤ x<2.

In some embodiments, the mass ratio of the silicon suboxide in the composite anode material (100) is 1-10%.

In some embodiments, the thickness of the second coating layer (30) is 40-130nm.

In some embodiments, the mass ratio of the carbon fibers in the composite anode material (100) is 10-20%.

In some embodiments, the porosity ratio of the second coating layer (30) is 60% -96%.

In some embodiments, the pore size distribution of the porous structure in the carbon fibers is in the range of 5-30nm.

In some embodiments, the diameter distribution of the carbon fibers is in the range of 0.1-1 µm.

In some embodiments, the ratio of the thickness of the second coating layer (30) to the first coating layer (20) is (2-40): 1.

In the composite anode material provided in the first aspect of this application, the inner core contains both silicon nanoparticles and titanium monoxide particles, wherein the titanium monoxide with a conductivity close to graphite has good conductivity performance, which can improve the electrical contact between adjacent silicon nanoparticles; the surface of the silicon-contained inner core has two coating layers, which can effectively relieve the volume expansion of the silicon in the inner core under their synergistic effect. Furthermore, the porous carbon fibers in the outermost coating layer have good conductivity, which can further improve the conductivity of the silicon nanoparticles and increase the rate performance of the overall composite anode material, and the porous structure can provide channels for lithium ion intercalation/de-intercalation, increase the contact area between the material and the electrolyte, and facilitate the practical utilization of the high theoretical capacity of the silicon material in the inner core.

Secondly, the present application provides a preparation method of the composite anode material including: dispersing silicon nanoparticles in an alcoholic solvent followed by adding a titanate and dispersing evenly, adding a silicate and a spinnable carbon source and dispersing evenly to obtain a mixed solution; electrospinning the mixed solution to obtain a composite fiber membrane; and pre-sintering the composite fiber membrane at 200-500°C under an air atmosphere followed by sintering the pre-sintered composite fiber membrane in plasma equipment under an inert atmosphere to obtain the composite anode material; wherein the power of the plasma equipment is 50-200W and the sintering temperature is 800-1200°C.

In some embodiments, the preparation method of the mixed solution includes: dispersing silicon nanoparticles in an alcoholic solvent followed by adding a titanate and dispersing evenly, adding a silicate and dispersing evenly followed by adding a spinnable carbon source and dispersing evenly to obtain the mixed solution.

In some embodiments, the sintering time is 1-3 hours.

In some embodiments, the pre-sintering time is 1-3 hours.

The above preparation method having a simple process and a convenient operation produces a composite anode material for lithium-ion batteries with a novel structure, which has an extremely low volume expansion effect, a large capacity and excellent cycling stability, and facilitates the application in industry.

Thirdly, the present application provides an anode sheet including the above-mentioned composite anode material.

Fourthly, the present application provides a battery including the above-mentioned anode sheet.

Fifthly, the present application provides a powered device including the above-mentioned battery.

### BRIEF DESCRIPTION OF THE DRAWINGS

FIG. 1 is a schematic diagram of the structure of the composite anode material in the embodiments of the present application.

FIG. 2 is a cross-sectional scanning electron microscope (SEM) photo of the anode sheet of the pouch full cell in Example 1 of the present application.

FIG. 3 is the cycling graph of coin cells of Example 1 and some Comparative Examples.

FIG. 4 is the cycling graph of pouch full cells of Example 1 and some Comparative Examples.

### DETAILED DESCRIPTION

The following is exemplary embodiments of the present application. It should be noted that some improvements and embellishments can be made to a person skilled in the art without departing from the principles of the present application embodiments and these improvements and embellishments are also considered within the scope of protection of the present application embodiments.

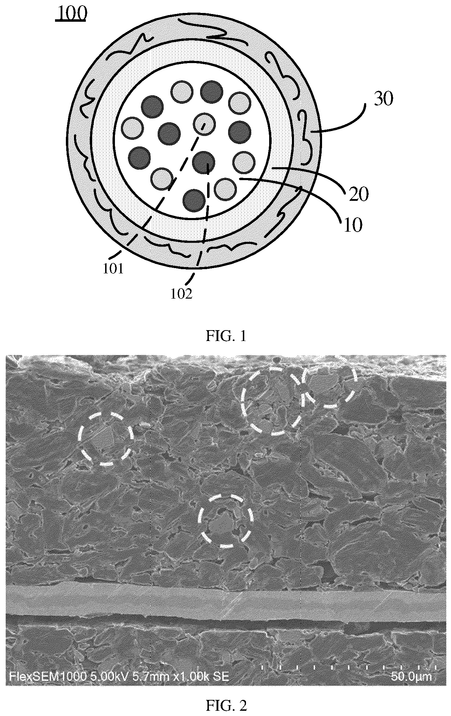

Referring to FIG. 1, FIG. 1 is a schematic diagram of the structure of the composite anode material in the embodiments of the present application. The composite anode material 100 includes an inner core 10, a first coating layer 20 coated on the surface of the inner core 10, and a second coating layer 30 coated on the surface of the first coating layer 20, wherein the inner core 10 includes silicon nanoparticles 101 and titanium monoxide particles 102, the first coating layer 20 includes silicon suboxide, and the second coating layer 30 includes carbon fibers with a porous structure.

In this application, the inner core 10 contains both silicon nanoparticles and titanium monoxide particles, wherein the titanium monoxide with a conductivity close to graphite has good conductivity performance, which can improve the electrical contact between adjacent silicon nanoparticles, thereby improving cycling and rate performance; in addition, titanium monoxide is a zero strain material with low thermal expansion during lithium intercalation/de-intercalation, and its presence can also suppress the volume expansion of the silicon.

The surface of the silicon-contained inner core 10 has two coating layers, wherein the first coating layer 20 formed by silicon suboxide has good stability. Specifically, the internal structural changes of silicon suboxide are small during long-term use, and the volume expansion effect during lithium ion intercalation/de-intercalation is small, lower than elemental silicon materials, therefore the first coating layer 20 can also suppress the expansion of the nano-silicon materials in the inner core. The second coating layer 30 formed by porous carbon fibers has a certain limiting effect and can alleviate the volume expansion of the silicon in the inner core together with the first coating layer 20, and the presence of porous structures in carbon fibers can also provide release channels for the volume expansion of silicon, further alleviating the volume effect of silicon. More importantly, carbon fibers have good conductivity, which can further improve the conductivity of nano-silicon materials, endow the overall composite anode material with good conductivity and enhance rate performance; and the porous structures also increase the contact area between the material and the electrolyte, provide channels for lithium ion intercalation/de-intercalation, improve the dynamic performance of the material and facilitate the practical utilization of the high theoretical capacity of the silicon material in the inner core.

Therefore, the composite anode material 100 provided in the present embodiments has a small volume expansion effect and good cycling stability during the lithium intercalation/de-intercalation process, a good conductivity, good rate performance and high specific capacity characteristics of the silicon material in the inner core can be fully utilized, resulting in a higher discharge capacity of the composite anode material and improving the energy density of the battery.

In an embodiment, the particle size distribution of the silicon nanoparticles is in the range of 80-150nm. In some embodiments of this application, the mass ratio of the silicon nanoparticles in the composite anode material 100 is 60% -82%. Silicon nanoparticles within the above range ensure that the specific capacity of the composite anode material 100 is not too low.

In some embodiments of this application, the average particle size of the titanium monoxide particles is 40-60nm. In this case, the conductivity of titanium monoxide is very high, close to graphite, which can significantly improve the conductivity of the anode material and improve the rate performance of the battery.

In some embodiments of this application, the mass ratio of the titanium monoxide particles in the composite anode material 100 is 2.5% -20%. By setting the above content of titanium monoxide particles, it is more conducive to improve the conductivity of the composite anode material 100, especially to establish electrical connections between silicon nanoparticles by titanium monoxide in the core 10, and the proportion of high specific capacity silicon nanoparticles will not be too low. For example, the mass ratio can be in the range of 2.5%-10% or 3%-8%. In an embodiment, titanium monoxide particles are distributed on/around the surface of the silicon nanoparticles.

In some embodiments of this application, the thickness of the first coating layer 20 (i.e., the silicon suboxide layer) can be in the range of 3-25nm. Controlling the thickness of the first coating layer 20 within this range can better alleviate the volume expansion of the silicon material in the inner core, without affecting the lithium ion intercalation/de-intercalation in the silicon in the inner core, and fully utilize the high specific capacity of the silicon material.

In the present embodiment, the chemical formula of the silicon suboxide is SiOx, 1≤x<2. In some embodiments of this application, the silicon suboxide includes amorphous silicon suboxide. Wherein, the mass ratio of the silicon suboxide in the composite anode material 100 is 1-10%. This mass ratio can ensure that the thickness of the first coating layer 20 is appropriate, neither the mass of the first coating layer 20 is too low to effectively reduce the volume expansion of the silicon material in the inner core nor the first coating layer 20 is too thick to facilitate electron/ion shuttling between the inner core 10 and the second coating layer 30.

In some embodiments of this application, the thickness of the second coating layer 30 formed by porous carbon fibers is 40-130nm. Understandably, carbon fibers have a hollow structure, and within the hollow structure of the carbon fibers the inner core 10 and the first coating layer 20 are formed, wherein the thickness of the second coating layer 30 formed by porous carbon fibers can be considered as the wall thickness of the carbon fibers. The appropriate thickness of the second coating layer 30 can not only suppress the volume expansion of the silicon material in the inner core 10 further, but also ensure the good conductivity of the overall composite anode material 100, ensuring good electrical contact between adjacent composite anode material particles.

In an embodiment, the mass ratio of the carbon fibers in the composite anode material 100 is 10-20%. This mass ratio can ensure that the coating thickness of the second coating layer 30 is appropriate, without further reducing the specific capacity of the composite anode material 100.

Furthermore, the thickness ratio of the second coating layer 30 to the first coating layer 20 is (2-40): 1. With the above settings, suppressing the volume expansion of nano silicon particles under the synergistic effect of the two layers can be effective, and the rate performance and fast charging performance of the composite anode material 100 can be improved.

In some embodiments of this application, the diameter distribution of the carbon fibers is in the range of 0.1-1µm.

In the present embodiment, the pore size distribution of the porous structure in the carbon fibers is in the range of 5-30nm; and the porosity ratio of the second coating layer is 60% -96%, such as 60%, 70%, 80%, 90%, etc.

The composite anode material provided in the present embodiments has a small volume expansion effect and a good conductivity, which enables the battery to have good cycling performance, rate performance and high discharge capacity.

The present embodiment also provides a preparation method of the above-mentioned composite anode material, including the following steps:
(1) Dispersing silicon nanoparticles in an alcoholic solvent followed by adding a titanate and dispersing evenly, adding a silicate and a spinnable carbon source and dispersing evenly to obtain a mixed solution; electrospinning the mixed solution to obtain a composite fiber membrane;
(2) Pre-sintering the composite fiber membrane at 200-500°C under an air atmosphere followed by sintering the pre-sintered composite fiber membrane in plasma equipment under an inert atmosphere to obtain the composite anode material; wherein the power of the plasma equipment is 50-200W and the sintering temperature is 800-1200°C.

In the above preparation method, when preparing a mixed solution for electrospinning, titanate and silicate are hydrolyzed in an alcoholic solvent and transform into TiO₂ and SiO₂ respectively. In step (1), when preparing a mixed solution, the silicon nanoparticles are first dispersed in an alcoholic solvent to obtain a dispersion solution of silicon nanoparticles, followed by the addition of titanium esters, followed by the addition of the silicate and a spinnable carbon source. The order in which these raw materials are added ensures that the silicon nanoparticles and titanium oxides obtained from the hydrolysis of the titanate will be coated by the silicon oxides obtained from the hydrolysis of the silicate, thus after subsequent treatment, a composite anode material with the above structure can be better obtained. The composite fiber membrane obtained by electrospinning includes a spinning membrane matrix formed by carbon source fibers, as well as silicon nanoparticles, SiO₂ and TiO₂ coated in it. The composite fiber membrane is pre-sintered under an air atmosphere, which helps to preliminarily form carbon fibers at low temperatures and to prepare the carbon fiber materials with uniform morphology. The pre-sintered composite fiber membrane has more stable properties and helps to improve the electrochemical performance of the prepared composite anode material; if high-temperature calcination is directly used, carbon fibers are easily blown. Afterwards, the pre-sintered composite fiber membrane is sintered in plasma equipment, by which it can be carbonized, the organic carbon material fibers can be transformed into conductive carbon fibers, pores can also be formed on the surface of the carbon fibers to form a porous structure, TiO₂ can be transformed into TiO and SiO₂ can be transformed into silicon suboxide. Wherein, selecting plasma equipment for high-temperature sintering can form a uniform porous structure on carbon fibers.

Wherein, the silicate includes one or more of methyl orthosilicate, ethyl orthosilicate, n-propyl orthosilicate, isopropyl orthosilicate, n-butyl orthosilicate, amyl orthosilicate, etc. The titanate includes one or more of tetrabutyl titanate, isopropyl titanate, tetraisopropyl titanate, tetraethyl titanate, isopropyl tris (dioctyl pyrophosphato) titanate, etc. The spinnable carbon source includes one or more of polyacrylonitrile, polyacrylic acid, polymethyl methacrylate, polyvinylidene fluoride, polyvinylpyrrolidone, polyvinyl alcohol, etc., without limitation. The alcoholic solvent can be an alcohol solvent, or a mixture of an alcohol solvent and other solvents (such as water or organic solvents). Wherein, the alcoholic solvent can be one or more of methanol, ethanol, ethylene glycol, n-propanol, polyethylene glycol, etc.

In some embodiments of the present application, the preparation method of the mixed solution in step (1) including: first dispersing silicon nanoparticles in an alcoholic solvent, followed by adding a titanate and dispersing evenly, then adding a silicate and dispersing evenly, and finally adding a spinnable carbon source and dispersing evenly to obtain a mixed solution for electrospinning. It is more conducive to obtain more composite anode materials with the above structure.

In some embodiments of this application, the mass ratio of the silicon nanoparticles to the volume ratio of the silicate is (0.5-3): (1-5) g/mL. The mass ratio of the silicon nanoparticles to the volume ratio of the titanate is (0.5-3): (0.1-1) g/mL. The mass ratio of the silicon nanoparticles to the spinnable carbon source is (0.5-3): (1-10).

In some embodiments of the present application, the parameters of the electrospinning including: a spinning voltage of 10-30kV, a feeding speed of the mixed solution of 30-110 µL/min, and a speed of 200-800 rpm of the receiving device of the electrospinning equipment. Wherein, the receiving device can be a receiving roller with controllable rotational speed, which can carry the composite fiber membrane obtained by spinning the mixed solution.

In the embodiment of the present application, the pre-sintering temperature is 200-500°C, specifically 250, 300, 320, 350, 400, 450 °C, etc. In some embodiments of the present application, the pre-sintering temperature is 320-500 °C. Wherein, the pre-sintering time can be 1-3 hours, such as 1.5 hours or 2 hours, etc.

In this application, plasma equipment is selected for high-temperature sintering, by which the organic carbon material fibers can be transformed into conductive carbon fibers, pores can also be formed on the carbon fibers and the porous structure of carbon fibers can be more uniform. Adjusting the power of plasma equipment (specifically referring to the power supply of the plasma source) can achieve the adjustment of the size and distribution of porous structures. Plasma is an ionized gas like substance produced by the ionization of atoms. As the plasma equipment power increases, the energy carried by the plasma beam generated by the electric field will become stronger and stronger. The material is subjected to these plasma effects, and on the one hand, pore structures will appear on the surface of the material due to the huge energy impact, achieving the purpose of etching, and on the other hand, the chemical bonds on the surface will be ionized, making it more susceptible to redox reactions.

In the embodiment of the present application, the sintering temperature in the plasma equipment is 800-1200°C, specifically 850, 900, 1000, 1050, 1100, 1150, 1200°C, etc. In some embodiments, the sintering temperature is between 800-1000°C. Wherein, the sintering time can be 1-3 hours, such as 1.5 hours or 2 hours, etc. The inert atmosphere includes at least one of argon (Ar), helium (He) and nitrogen (N₂) atmospheres.

The preparation method of the composite anode material provided in the present embodiment having a simple process and a convenient operation produces a composite anode material for lithium-ion batteries with a novel and stable structure, which has an extremely low volume expansion effect, a large capacity and excellent cycling stability, and facilitates the application in industry.

The present embodiment also provides an anode sheet containing the above-mentioned composite anode material in the embodiment of the present application.

Specifically, the anode sheet includes an anode current collector, an anode active material layer set on the anode current collector, and the anode active material layer includes the above-mentioned composite anode material. In some embodiments, the anode active material layer also includes a binder to improve the adhesion of the composite anode material on the anode current collector. As mentioned above in this application, since the outer layer of the composite anode material includes the conductive carbon fiber coating layer, the anode active material layer may not require the addition of a conductive agent. Of course, in other embodiments, conductive agents may also be included to further improve the conductivity of the anode active material layer. In this case, the anode active material layer includes the above-mentioned composite an anode material, a binder and a conductive agent. Exemplary conductive agents can be graphite, carbon black, graphene, etc. Wherein, the mass content of the composite anode material in the anode active material layer can be 50-90wt%, the content of the binder can be 1-10wt%, and the content of the conductive agent can be 0.1-10wt%. The compaction density of the anode sheet can be 1.1-2 g/cm³.

The present embodiment also provides a battery including the above-mentioned anode sheet in the embodiment of the present application. The battery here can refer to a single battery, a battery module or a battery pack. Wherein, the single battery includes not only the anode sheet mentioned above, but also a cathode sheet, a separator and electrolyte located between the cathode sheet and the anode sheet, and a battery shell. The cathode sheet, separator and electrolyte are arranged inside the battery shell. The battery module and battery pack can include multiple single batteries. The specific structure of the single battery, the battery module and the battery pack can refer to the conventional description in the field of batteries, which is not described in detail here.

Due to the composite anode materials with excellent performance as anode active materials, this battery can balance a high energy density, good cycling performance and rate performance, which is conducive to its widespread application.

The embodiment of the present application also provides a powered device including a above-mentioned battery in the embodiment of the present application. The powered device can be a vehicle, a mobile electronic device or an energy storage system.

The technical solution of this application is illustrated through several specific examples.

### Example 1

A preparation method of a composite anode material, including the following steps:

0.5g of silicon nanoparticles (purchased from Aladdin Company, with an average particle size of about 120nm and a particle size distribution in the range of 80-150nm) were dispersed in a mixture of 5mL of ethanol and ethylene glycol (ethanol: ethylene glycol volume ratio of 1:1). After stirring at a high speed of 1000 rpm for 1 hour, 1mL of isopropyl titanate was added and stirred at a high speed of 1000 rpm for 2 hours. Then, 1mL of butyl orthosilicate and 1g of polyacrylonitrile were added and stirred at a low speed of 200 rpm for more than 12 hours to obtain a silicon-contained mixed solution for electrospinning. Then, the mixed solution was electrospun according to the following process parameters to obtain a composite fiber membrane: a rotational speed of 800 rpm of the receiving device of the electrospinning equipment, a spinning voltage of 10kV, and a feeding speed of the spinning solution of 30 µ L/min.

The above-mentioned composite fiber membrane was placed in a muffle furnace and pre-sintered at 500°C for 2 hours under an air atmosphere, and was placed in plasma equipment (Zhengzhou Kejia Electric Furnace Co., Ltd., model KJ-OTF-1700-F5) and sintered under an argon atmosphere for 2 hours, with a sintering temperature of 900°C and a plasma equipment power of 200W to obtain the composite anode material.

The composite anode material of Example 1 has a double coating layer structure, wherein the inner core includes silicon nanoparticles and titanium monoxide particles, the first coating layer coated on the surface of the inner core includes amorphous silicon suboxide, and the second coating layer coated on the surface of the first coating layer is formed by carbon fibers with a porous structure. Wherein, in the composite anode material, the mass ratio of silicon nanoparticles is 76%; the mass ratio of titanium monoxide particles is 6% with an average particle size of 50nm; the mass ratio of the silicon suboxide is 6%, and the thickness of the first coating layer (i.e. silicon suboxide layer) is 10nm; the mass ratio of carbon fibers is 12%, the thickness of the second coating layer (i.e. carbon fiber coating layer) is 53nm, the diameter distribution of carbon fibers is in the range of 0.1-1 µ m, the pore size distribution of the porous structure in carbon fibers ranges from 5-30nm, and the porosity ratio of the second coating layer is 95%.

### Preparation of a lithium pouch cell:

The composite anode material of Example 1 was mixed with commercial graphite in a mass ratio of 10:90 as the anode active material, which was then dispersed in deionized water with a conductive agent Super P and a binder CMC in a mass ratio of 9:0.5:0.5 to obtain the anode slurry; then the anode slurry was evenly coated on the copper foil current collector, dried in vacuum and punched into 80 × 60mm pieces to obtain the anode sheet (its cross-sectional SEM photo is shown in FIG. 2, and the white circle in FIG. 2 represents the composite anode material). Using lithium iron phosphate as the cathode, the above-mentioned anode sheet as the anode, PE/PP film as the separator, LiPF6 as the electrolyte, and aluminum-plastic film as the shell, a lithium pouch full cell was assembled.

### Preparation of a lithium coin cell:

The composite anode material of Example 1 as the active material, was dispersed in deionized water with a conductive agent Super P and a binder carboxymethyl cellulose sodium (CMC) in a mass ratio of 7:1.5:1.5 to obtain a slurry; then the slurry was evenly coated on the copper foil current collector, dried in vacuum and punched into pieces with a diameter of 1.5cm to obtain the anode sheet. Using a metal lithium sheet as the counter electrode, a PP (polypropylene)/PE (polyethylene) laminated film as the separator, LiPF6 as the electrolyte, a coin cell was assembled with the above-mentioned anode sheet.

### Example 2

The difference between the preparation method of the composite anode material in Example 2 and Example 1 is that the plasma equipment power is 100W.

The difference between the composite anode material provided in Example 2 and Example 1 is that in the composite anode material of Example 2, the mass ratio of silicon nanoparticles is 78.5%; the mass ratio of titanium monoxide particles is 5.5% with an average particle size of 52nm; the mass ratio of the silicon suboxide is 5%, and the thickness of the first coating layer is 9.5nm; the mass ratio of carbon fibers is 11%, the diameter distribution of carbon fibers is in the range of 0.1-1 µ m, the thickness of the second coating layer is 50nm and the porosity of the second coating layer is 75%.

### Example 3

The difference between the preparation method of the composite anode material in Example 3 and Example 1 is that the plasma equipment power is 50W.

The difference between the composite anode material provided in Example 3 and Example 1 is that in the composite anode material of Example 3, the mass ratio of silicon nanoparticles is 80%; the mass ratio of titanium monoxide particles is 5% with an average particle size of 56nm; the mass ratio of the silicon suboxide is 4%, and the thickness of the first coating layer is 9nm; the mass ratio of carbon fibers is 11%, the thickness of the second coating layer is 48nm and the porosity of the second coating layer is 60%.

### Example 4

A preparation method of a composite anode material differs from Example 1 in that the amount of isopropyl titanate is 0.5mL.

The structure of the composite anode material provided in Example 4 is basically the same as Example 1, with the main difference being that in the composite anode material of Example 4, the mass ratio of titanium monoxide particles is 3%, and other parameters fluctuate slightly or remain unchanged. Wherein, the average particle size of titanium monoxide particles is 47nm; the mass ratio of silicon nanoparticles is 79%; the thickness of the first coating layer is 10nm, the mass ratio of the silicon suboxide is 6%; the thickness of the second coating layer is 53nm, the mass ratio of carbon fibers is 12%, and the porosity ratio of the second coating layer is 93%.

### Example 5

A preparation method of a composite anode material differs from Example 1 in that the amounts of silicon nanoparticles, isopropyl titanate, n-butyl orthosilicate and polyacrylonitrile are 0.35g, 2mL, 2mL and 2g respectively.

The difference between the composite anode material provided in Example 5 and Example 1 is that in the composite anode material of Example 5, the mass ratio of silicon nanoparticles is 60%; the mass ratio of titanium monoxide particles is 10%, the average particle size of titanium monoxide particles is 51nm; the mass ratio of the silicon suboxide is 10%, the thickness of the first coating layer is 25nm; the mass ratio of carbon fibers is 20%, the thickness of the second coating layer is 130nm, and the porosity ratio of the second coating layer is 92%.

### Example 6

A preparation method of a composite anode material differs from Example 1 in that the amounts of silicon nanoparticles, isopropyl titanate, n-butyl orthosilicate and polyacrylonitrile are 0.4g, 4mL, 0.2mL and 1.5g respectively.

The difference between the composite anode material provided in Example 6 and Example 1 is that in the composite anode material of Example 6, the mass ratio of silicon nanoparticles is 65%; the mass ratio of titanium monoxide particles is 20%, the average particle size of titanium monoxide particles is 56nm; the thickness of the first coating layer is 3nm, the mass ratio of the silicon suboxide is 1%; the thickness of the second coating layer is 85nm, the mass ratio of carbon fibers is 14%, and the porosity ratio of the second coating layer is 91%.

### Example 7

A preparation method of a composite anode material differs from Example 1 in that the sintering temperature in the plasma equipment is 800°C.

The structure of the composite anode material provided in Example 7 is basically the same as Example 1, with the difference being that in the composite anode material of Example 7, the mass ratio of silicon nanoparticles is 81%; the mass ratio of titanium monoxide particles is 4%, the average particle size of titanium monoxide particles is 47nm; the thickness of the first coating layer is 8nm, the mass ratio of the silicon suboxide is 4%; the thickness of the second coating layer is 53nm, the mass ratio of carbon fibers is 11%, and the porosity ratio of the second coating layer is 90%.

### Example 8

A preparation method of a composite anode material differs from Example 1 in that the sintering temperature in the plasma equipment is 1200°C.

The difference between the composite anode material provided in Example 8 and Example 1 is that the mass ratio of silicon nanoparticles is 74.5%; the mass ratio of titanium monoxide particles is 6.5%, the average particle size of titanium monoxide particles is 51nm; the thickness of the first coating layer is 9.5nm, the mass ratio of the silicon suboxide is 6%; the thickness of the second coating layer is 55nm, the mass ratio of carbon fibers is 13%, and the porosity ratio of the second coating layer is 96%.

### Example 9

A preparation method of a composite anode material differs from Example 1 in that the pre-sintering temperature under an air atmosphere is 400°C.

The difference between the composite anode material provided in Example 9 and Example 1 is that the mass ratio of silicon nanoparticles is 76.9%; the mass ratio of titanium monoxide particles is 5.7%, the average particle size of titanium monoxide particles is 48nm; the thickness of the first coating layer is 10nm, the mass ratio of the silicon suboxide is 5.8%; the thickness of the second coating layer is 52nm, the mass ratio of carbon fibers is 11.6%, and the porosity ratio of the second coating layer is 93%.

The composite anode material provided in Examples 1-9 above has characteristic peaks at 2 *θ* =28.4° , 47.3° , 56.1° , 69.1° and 76.4° in X-ray diffraction (XRD) pattern, corresponding to the characteristic diffraction peaks of (111), (220), (311), (400), and (331) crystal face of elemental silicon respectively, and has characteristic peaks at 2 *θ* =37.3° , 43.4° , 63.0° , 75.4° and 79.5° , corresponding to the characteristic diffraction peaks of the (111), (200), (220), (311), and (222) crystal face of TiO₂ respectively. Wherein, the peak width at half height of the characteristic peak at 2 *θ* =28.4° is 0.2-4° , the peak width at half height of the characteristic peak at 2 *θ* =47.3° is 0.5~5° , the peak width at half height of the characteristic peak at 2 *θ* =56.1° is 0.1-3° , the peak width at half height of the characteristic peak at 2 *θ* =69.1 ° is 0.2-5° ; two *θ* The peak width at half height of the characteristic peak at 76.4° is 0.2-5 ° ; the peak width at half height of the characteristic peak at 2 *θ* = 37.3° is 0.1-3° , the peak width at half height of the characteristic peak at 2 *θ* =43.4° is 0.2-4° the peak width at half height of the characteristic peak at 2 *θ* =63.0° is 0.2-4° , the peak width at half height of the characteristic peak at 2 *θ* =75.4° is 0.3~3° , the peak width at half height of the characteristic peak at 2 *θ* =79.5° is 0.2-4° . The narrow peak width at half height of these characteristic diffraction peaks reflects the good crystallization performance of the composite anode material.

To highlight the beneficial effects of this application, the following comparative examples are set for Example 1.

### Comparative Example 1

The difference between Comparative Example 1 and Example 1 is that after pre-sintering in a muffle furnace, it was placed in a plasma equipment for sintering at 900 °C, but the power of the plasma equipment was 0 W (corresponding to sintering in an inert atmosphere without providing a plasma environment).

Composite anode material was prepared without sintering in plasma equipment in the Comparative Example 1, so there are few porous structures on the outer carbon fibers, and the titanium oxide in the system is mainly titanium dioxide.

### Comparative Example 2

The difference between Comparative Example 2 and Example 1 is that butyl orthosilicate was not added when preparing the mixed solution for electrospinning.

Compared with Example 1, there is no silicon suboxide coating layer between the inner core and the porous carbon fiber coating layer of the composite anode material obtained by Comparative Example 2.

### Comparative Example 3

The difference between Comparative Example 3 and Example 1 is that isopropyl titanate was not added when preparing the mixed solution for electrospinning.

Compared with Example 1, the composite anode material obtained in Comparative Example 3 only includes silicon nanoparticles in the inner core and does not include titanium monoxide.

### Comparative Example 4

The difference between Comparative Example 4 and Example 1 is that the mixed solution in Example 1 was not electrospun, but was centrifuged and vacuum dried at 105°C for 12 hours to obtain the mixed powders. The mixed powders were first calcined in a muffle furnace at 500°C for 2 hours, and then placed in a plasma equipment for 2 hours at a temperature of 900 °C, but the power of the plasma equipment was 0 W.

In the composite anode material in the Comparative Example 4, the outermost coating layer is an amorphous carbon coating layer. This is mainly because polyacrylonitrile was not electrospun to form spinning fibers, and therefore cannot obtain carbon fibers after sintering.

In support of the beneficial effects of this application, the anode composite materials of above-mentioned Examples and Comparative Examples were assembled into coin cells and lithium pouch cells according to the method recorded in Example 1. In addition, commercial silicon nanomaterials will also be used as anode materials to assemble coin cells and lithium pouch cells, forming Comparative Example 5.

Each coin cell and lithium pouch cell were placed in the blue electric test cabinet for charge and discharge cycle testing, with a charge or discharge current of 0.5C. The voltage range of the coin cell was 0.005-1.5V, and the voltage range of the pouch cell was 2-3.8V. When charging, each battery was charged at a constant current of 0.5C to the charging cut-off voltage (1.5V for coin cells and 3.8V for pouch cells), and then was charged at a constant voltage until it was fully charged, with a cutoff current of 0.05C. When discharging, it was discharged at a constant current of 0.5C to the corresponding discharge cut-off voltage (0.005V for coin cells and 2V for pouch cells). The initial charging specific capacity, initial discharging specific capacity, initial Coulombic efficiency, capacity retention ratio after a certain number of cycles and cycle life of each battery were tested.

Wherein, the initial charging specific capacity of each lithium pouch cell and coin cell refers to the ratio of the capacity charged into each battery during the first charging to the mass of the active material acting as the cathode of the battery. The initial discharging specific capacity refers to the ratio of the capacity released by each battery during the first discharging to the mass of the active material acting as the anode of the battery. The initial (or "first cycle") Coulombic efficiency of each lithium pouch cell and coin cell refers to the ratio of the initial discharging specific capacity of the corresponding battery to its initial charging specific capacity. The capacity retention ratio of each coin cell and lithium pouch cell refers to the ratio of the discharging capacity of the corresponding battery after a certain number of cycles (300 cycles for coin cells and 600 cycles for lithium pouch cells) to its initial discharging capacity. The cycle life of each coin cell and lithium pouch cell refers to the number of cycles corresponding to the discharging capacity of the battery decaying to 80% of the initial discharging capacity.

In addition, EIS (alternating current impedance) testing was also conducted on the pouch full cell. The testing method includes discharging the assembled pouch full cell to 50% SOC cut-off, conducting EIS testing at a Gamma electrochemical workstation, with a testing frequency of 100KHz~0.05Hz.

The test results are summarized in Tables 1 and 2 below.

**Table 1 Summary of Test Results of the coin cells of Examples and Comparative Examples**

| Experiment Number | Initial Charging Specific Capacity (mAh/g) | Initial Discharging Specific Capacity (mAh/g) | 300 Cycles Capacity Retention Ratio (%) | Cycle Life (times) |
|---|---|---|---|---|
| Example 1 | 2400 | 2064 | 86.5 | 500 |
| Example 2 | 2353 | 2003 | 84.8 | 460 |
| Example 3 | 2389 | 2010 | 83.5 | 430 |
| Example 4 | 2395 | 2039 | 85.1 | 491 |
| Example 5 | 1820 | 1631 | 87.8 | 656 |
| Example 6 | 1880 | 1667 | 87.1 | 621 |
| Example 7 | 2420 | 2058 | 85.0 | 485 |
| Example 8 | 2386 | 2051 | 85.8 | 492 |
| Example 9 | 2389 | 2032 | 85.1 | 479 |
| Comparative Example 1 | 2360 | 1986 | 82.9 | 361 |
| Comparative Example 2 | 2335 | 1953 | 82.6 | 356 |
| Comparative Example 3 | 2364 | 1865 | 81.9 | 352 |
| Comparative Example 4 | 2296 | 1854 | 81.5 | 349 |
| Comparative Example 5 | 3200 | 2890 | / | 200 |

**Table 2 Summary of Test Results of the pouch cells of Examples and Comparative Examples**

| Experiment Number | Initial Charging Specific Capacity (mAh/g) | Initial Discharging Specific Capacity (mAh/g) | Initial Coulombic Efficiency (%) | 600 Cycles Capacity Retention Ratio (%) | EIS (ohm) |
|---|---|---|---|---|---|
| Example 1 | 536 | 461 | 86.0 | 83.5 | 5.5 |
| Example 2 | 534 | 453 | 84.8 | 81.9 | 5.9 |
| Example 3 | 525 | 432 | 82.3 | 80.6 | 6.8 |
| Example 4 | 529 | 451 | 85.3 | 82.9 | 6.1 |
| Example 5 | 486 | 434 | 89.4 | 86.3 | 5.1 |
| Example 6 | 491 | 435 | 88.5 | 85.8 | 5.4 |
| Example 7 | 530 | 455 | 85.8 | 82.5 | 5.7 |
| Example 8 | 534 | 459 | 85.9 | 82.7 | 5.3 |
| Example 9 | 528 | 449 | 85.0 | 82.2 | 5.9 |
| Comparative | 528 | 426 | 80.7 | 65 (lifespan | 7.2 |
| Example 1 | | | | 420 cycles) | |
| Comparative Example 2 | 532 | 429 | 80.6 | 62 (lifespan 398 cycles) | 7.9 |
| Comparative Example 3 | 519 | 421 | 81.1 | 58 (lifespan 353 cycles) | 8.0 |
| Comparative Example 4 | 526 | 435 | 82.7 | 53 (lifespan 341 cycles) | 9.2 |
| Comparative Example 5 | 604 | 543 | 89.9 | 15 (lifespan 120 cycles) | 12.3 |

Note: The cycling performance of pouch cells of several Comparative Examples was poor, and the cycling life could not reach 600 cycles. The cycling capacity retention ratio data of pouch cells of Comparative Examples 1-5 in Table 2 were the data when they reached the corresponding cycling life cycles

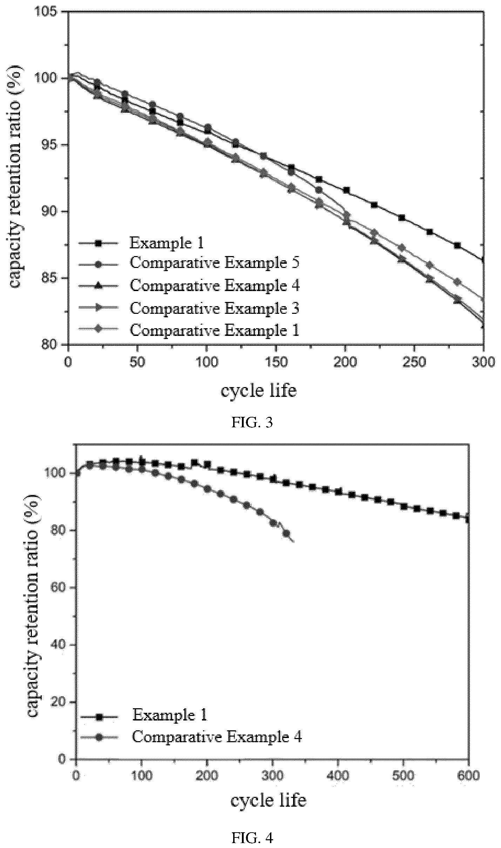

From Table 1 and FIG. 3, it can be seen that the coin cell in the embodiment of this application has a longer cycle life, and there is no obvious diving phenomenon after more than 300 cycles, while the proportion shows obvious diving phenomenon after 200 cycles. Therefore, it can be inferred that the composite anode material in this application has excellent cycling stability.

From Table 2 and FIG. 4, it can be seen that the EIS value of the pouch cell in the present embodiments is relatively small, with a good conductivity and good cycling performance. In addition, from the data of Examples 1-3, it can be seen that increasing the power of plasma treatment can increase the porosity ratio of the porous carbon fiber coating layer, significantly improve the conductivity of the composite anode material, reduce the impedance of the battery, and enhance the cycling performance. The conductivity of the anode material of Comparative Examples 1-5 is worse than that of the present embodiment, and the porosity ratio of the material is lower, the ion diffusion impedance is higher, and therefore the cycle life is shorter.

The above embodiments only express several embodiments of the present application, and their description is more specific and detailed, so it should not be construed as a limitation on the scope of the present application patent. It should be noted that for a person skilled in the art, several modifications and improvements can be made without departing from the concept of this application, all of which fall within the scope of protection of this application. Therefore, the scope of protection of this patent application should be based on the attached claims.

## Claims

1. A composite anode material (100), **characterized in that** the composite anode material (100) comprises an inner core (10), a first coating layer (20) coated on the surface of the inner core (10), and a second coating layer (30) coated on the surface of the first coating layer (20), wherein the inner core (10) comprises silicon nanoparticles (101) and titanium monoxide particles; the first coating layer (20) comprises silicon suboxide; and the second coating layer (30) comprises carbon fibers with a porous structure.

2. The composite anode material (100) according to claim 1, **characterized in that** the particle size distribution of the silicon nanoparticles (101) is in the range of 80-150nm.

3. The composite anode material (100) according to claim 1 or 2, **characterized in that** the mass ratio of the silicon nanoparticles (101) in the composite anode material (100) is 60% -82%.

4. The silicon based composite anode material (100) according to any one of claims 1-3, **characterized in that** the average particle size of the titanium monoxide particles is 40-60nm.

5. The composite anode material (100) according to any one of claims 1-4, **characterized in that** the mass ratio of the titanium monoxide particles in the composite anode material (100) is 2.5% -20%.

6. The composite anode material (100) according to any one of claims 1-5, **characterized in that** the thickness of the first coating layer (20) is 3-25nm.

7. The composite anode material (100) according to any one of claims 1-6, **characterized in that** the silicon suboxide comprises amorphous silicon suboxide.

8. The composite anode material (100) according to any one of claims 1-7, **characterized in that** the chemical formula of the silicon suboxide is SiOx, 1≤x<2.

9. The composite anode material (100) according to any one of claims 1-8, **characterized in that** the mass ratio of the silicon suboxide in the composite anode material (100) is 1-10%.

10. The composite anode material (100) according to any one of claims 1-9, **characterized in that** the thickness of the second coating layer (30) is 40-130nm.

11. The composite anode material (100) according to any one of claims 1-10, **characterized in that** the mass ratio of the carbon fibers in the composite anode material (100) is 10-20%.

12. The composite anode material (100) according to any one of claims 1-11, **characterized in that** the porosity ratio of the second coating layer (30) is 60% -96%.

13. The composite anode material (100) according to any one of claims 1-12, **characterized in that** the pore size distribution of the porous structure in the carbon fibers is in the range of 5-30nm.

14. The composite anode material (100) according to any one of claims 1-13, **characterized in that** the diameter distribution of the carbon fibers is in the range of 0.1-1µm.

15. A preparation method of the composite anode material (100) according to any one of claims 1-14, **characterized in that**:
Dispersing silicon nanoparticles (101) in an alcoholic solvent followed by adding a titanate and dispersing evenly, adding a silicate and a spinnable carbon source and dispersing evenly to obtain a mixed solution; electrospinning the mixed solution to obtain a composite fiber membrane; and
pre-sintering the composite fiber membrane at 200-500°C under an air atmosphere followed by sintering the pre-sintered composite fiber membrane in plasma equipment under an inert atmosphere to obtain the composite anode material (100); wherein the power of the plasma equipment is 50-200W and the sintering temperature is 800-1200°C.

16. The preparation method according to claim 15, **characterized in that** the preparation method of the mixed solution comprises: dispersing silicon nanoparticles (101) in an alcoholic solvent followed by adding a titanate and dispersing evenly, adding a silicate and dispersing evenly followed by adding a spinnable carbon source and dispersing evenly to obtain the mixed solution.

17. The preparation method according to claims 15 or 16, **characterized in that** the sintering time is 1-3 hours and the pre-sintering time is 1-3 hours.

18. An anode sheet, **characterized in that** it contains a composite anode material according to any one of claims 1-14.

19. A battery, **characterized in that** it comprises an anode sheet according to claim 18.

20. A powered device, **characterized in that** it comprises a battery according to claim 19.
